**Europäisches Patentamt**

**European Patent Office**

**Office européen des brevets**

(19)

(11) Veröffentlichungsnummer : **0 329 738 B1**

(12) **EUROPÄISCHE PATENTSCHRIFT**

(45) Veröffentlichungstag der Patentschrift :
**22.04.92 Patentblatt 92/17**

(51) Int. Cl.$^5$ : **F16H 7/12**

(21) Anmeldenummer : **88907061.1**

(22) Anmeldetag : **01.08.88**

(86) Internationale Anmeldenummer :
**PCT/EP88/00696**

(87) Internationale Veröffentlichungsnummer :
**WO 89/01098 09.02.89 Gazette 89/04**

(54) **VORRICHTUNG ZUM SPANNEN VON KEILRIEMEN, INSBESONDERE FÜR KRAFTFAHRZEUGE.**

(30) Priorität : **31.07.87 DE 8710548 U**

(43) Veröffentlichungstag der Anmeldung :
**30.08.89 Patentblatt 89/35**

(45) Bekanntmachung des Hinweises auf die
Patenterteilung :
**22.04.92 Patentblatt 92/17**

(84) Benannte Vertragsstaaten :
**DE FR GB IT**

(56) Entgegenhaltungen :
**EP-A- 0 243 237**

(56) Entgegenhaltungen :
**DE-A- 3 211 095**
**FR-A- 2 350 518**
**GB-A- 1 304 368**
**US-A- 4 657 524**

(73) Patentinhaber : **INA Wälzlager Schaeffler KG**
**Industriestrasse 1-3**
**W-8522 Herzogenaurach (DE)**

(72) Erfinder : **BREINDL, Werner**
**Siriusstrasse 2**
**W-8044 Unterschleissheim (DE)**
Erfinder : **SCHRÖDER Werner**
**Lochen 37**
**W-8157 Dietramszell 1 (DE)**

EP 0 329 738 B1

Jouve, 18, rue Saint-Denis, 75001 PARIS

**Beschreibung**

Die Erfindung betrifft eine Vorrichtung zum Spannen von Keilriemen, nach dem Ober begriff des Anspruchs 1.

Bekannte Vorrichtungen dieser Art bewirken einen Längenausgleich der Keilriemenschleife, welcher nicht dazu ausreicht, bei hohen Drehzahlen ein Riemenflattern zu vermeiden, wenn Längenunterschiede des Keilriemens aufgrund von Alterung, durch Wärmeeinwirkung oder durch Zuschaltung von durch den Keilriemen angetriebenen Hilfseinrichtungen auftreten.

Die Druckflüssigkeitsfüllung des Zylinderraums bildet eine Abstützung für die Kolbenstange gegenüber dem Gehäuse, wobei diese Abstützung aber trotz der Wirkung des Rückschlagventiles und der Inkompressibilität der Flüssigkeitsfüllung nicht starr, sondern wegen der möglichen Leck-Druckflüssigkeitsströmung über das erwähnte Spiel volumenveränderlich ist, wobei die Druckflüssigkeitsfüllung des erwähnten Zylinders aufgrund der Wirkung des Rückschlagventils im Sinne einer Vergrößerung der wirksamen Länge des Lenkerelementes rasch ergänzt und im Sinne einer Verkürzung des Lenkerelementes aufgrund der Leck-Druckflüssigkeitsströmung durch das erwähnte Spiel langsamer vermindert werden kann. Eine Druckflüssigkeitsströmung über das Rückschlagventil ermöglicht außerdem eine Dämpfung der Längenveränderungsbewegung des Lenkerelementes zur wirksamen Abdämpfung eines Riemenflatterns.

Vorteilhafte Raumformen der erfindungs gemäßen Vorrichtung sind in den Ansprüchen 2 bis 5 gekennzeichnet, deren Inhalt hierdurch ausdrücklich zum Bestandteil der Beschreibung gemacht wird, ohne an dieser Stelle den Wortlaut zu wiederholen.

Nachfolgend wird eine bevorzugte Ausführungsform unter Bezugnahme auf die Zeichnung erläutert. Es stellen dar:

Eine solche aus der US-A-4 657 524 bekannte Vorrichtung weist ein zweigeteiltes Gehäuse auf, wovon ein Gehäuseteil in eine Gewindebohrung einer festen Wand eingeschraubt ist und das zweite Gehäuseteil in das erste Gehäuseteil eingeschraubt ist. Die Wand bildet hier das feststehende Widerlager für das Gehäuse. Das zweite Gehäuseteil benötigt hier ein Außengewinde, während das erste Gehäuseteil ein Außengewinde und ein Innengewinde benötigt. In der Bohrung des zweiten Gehäuseteils ist der aufragende Zylinder verschiebbar angeordnet, wobei sich ein von dem Rückschlagventil verschlossener Gehäuseinnenraum in diesem zweiten Gehäuseteil unterhalb des Rückschlagventils befindet. Zwischen dem oberhalb des Rückschlagventils befindlichen Bereich des Zylinders und dem zweiten Gehäuseteil kann keine Druckflüssigkeit hindurchströmen, da hier ein erster Dichtungsring dieses verhindern soll. In entsprechender Weise ist zwischen dem Zylinder und dem innerhalb des Zylinders verschieblich gelagerten Kolben ein zweiter Dichtungsring zur Verhinderung des Durchtritts von Druckflüssigkeit vorgesehen.

Diese Vorrichtung weist eine große Baulänge auf, weil der Gehäuseinnenraum für die Druckflüssigkeit in Achsrichtung unterhalb des Kolbens und des Rückschlagventils angeorgnet ist. Diese Vorrichtung ist aufwendig, da beispielsweise zwei voneinander getrennte Gehäusteile erforderlich sind, die über eine Schraubverbindung miteinander verbunden und über eine Kontermutter an der festen Wand befestigt werden.

Demgegenüber liegt der Erfindung die Aufgabe zugrunde, die Vorrichtung zum Spannen von Keilriemen konstruktiv zu vereinfachen.

Diese Aufgabe wird erfindungsgemäß durch die Merkmale des Anspruchs 1 gelöst.

Fig. 1 eine schematische Skizze zur Erläuterung der Wirkungsweise einer Vorrichtung zum Spannen von Keilriemen und

Fig. 2 eine teilweise im Schnitt gezeichnete Seitenansicht eines Lenkerelementes der Vorrichtung nach Figur 1.

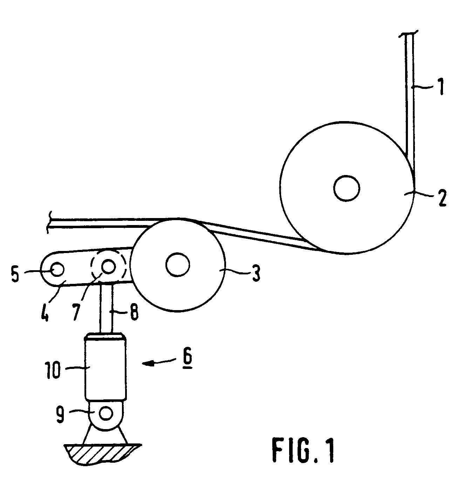

Figur 1 zeigt einen Abschnitt eines Keilriemens 1, der über eine Keilriemenscheibe 2 eines Antriebs oder eines angetriebenen Teiles sowie über eine mitlaufende Keilriemenscheibe 3 gelegt ist. Die Keilriemenscheibe 3 ist an einem Lenker 4 bei 5 gehäusefest gelagert und kann mittels eines längenveränderlichen Lenkerelementes (Spannelement) 6 auf den Keilriemen 1 hin vorgespannt werden, um den Keilriemen 1 unter Spannung zu halten. Das Lenkerelement 6 besitzt eine über ein Anschlußlager 7 an den Lenker 4 angeschlossene Kolbenstange 8 sowie ein über ein Anschlußlager 9 an einen Teil eines Rahmens oder Gestells angeschlossenes Gehäuse 10.

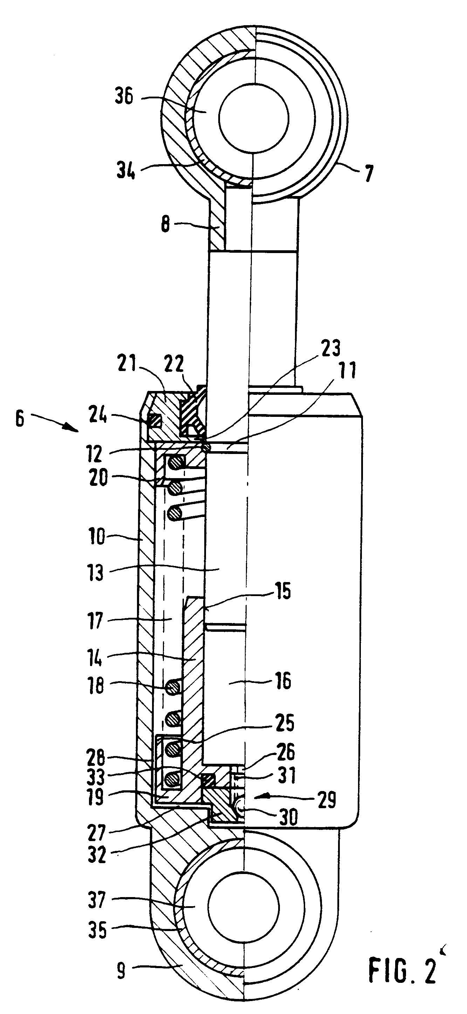

Die Kolbenstange 8 ist mit einer Nut oder Rille 11 versehen, in welche ein geteilter Federring 12 eingesetzt ist. Der mit Bezug auf die Darstellung von Figur 2 untere Teil der Kolbenstange 8 unterhalb des Federringes 12 bildet einen Kolbenabschnitt 13, welcher in einen Zylinder 14 hineinreicht, der koaxial vom Boden des Innenraumes des Gehäuses 10 aufragt. Der Kolbenabschnitt 13 ist in dem Zylinder 14, wie in der Zeichnung nicht im einzelnen gezeigt, bei 15 mit solchem Spiel geführt, daß durch das Spiel eine Leck-Druckflüssigkeitsströmung einer im Zylinderinnenraum 16 vorgesehenen Druckflüssigkeitsfüllung ermöglicht wird.

Zwischen der Kolbenstange bzw. der Außenfläche des Zylinders 14 einerseits und dem Außenmantel des Gehäuses 10 andererseits ist ein Gehäuseinnenraum 17 gebildet, der als Federgehäuse für eine Druck-Schraubenfeder 18 dient. Die Druck-Schraubenfeder 18 stützt sich einerseits gegen ein gehäuseseitiges Federlager 19 innerhalb des Gehäuseinnenraumes 17 und andererseits gegen ein Federlager 20 in Gestalt eines auf dem Kolbenabschnitt 13 geführten Ringes mit einer sich axial in Richtung auf den Gehäuseinnenraum 17 öffnenden Nut ab. Das Federlager 20 überträgt die Vorspannkraft der Druck-Schraubenfeder 18 über den Federring 12 und die Nut oder Rille 11 der Kolbenstange 8 auf diese.

Die Kolbenstange 8 und das an ihrem Ende vorgesehene Anschlußlager 7 werden mittels eines Gehäusedeckels 21 in dem Gehäuse 10 gehalten, wobei der Gehäusedeckel 21 mit einer an der Kolbenstange 8 anliegenden Abstreifrichtung 22 sowie einem radial auf die Kolbenstange hin sich erstreckenden Flansch 23 versehen ist, welcher mit dem Federring 12 als Anschlag zusammenwirkt. Der Gehäusedeckel 21 ist unter Zwischenlage eines in eine Umfangsnut des Gehäusedeckels eingesetzten Dichtungsringes 24 durch Einbördeln des Gehäusemantels in der dargestellten Weise in der oberen Gehäuseöffnung befestigt.

Aus Figur 2 ist zu ersehen, daß das Federlager 19 und der Zylinder 14 an einem Gehäuseeinsatz 25 ausgebildet sind, der mit Schiebesitz in den Innenraum des Gehäuses 10 eingeschoben ist. Der Gehäuseeinsatz 25 weist einen von der Mitte seines Bodens aus dem Zylinderraum 16 ausmündenden Axialkanal 26, zwischen seiner äußeren Stirnfläche und dem Boden des Gehäuseinnenraums verlaufende Radialkanäle 27 und zwischen der Aussenfläche des Federlagers 19 und der Innenwand des Gehäuseinnenraums verlaufende Axialkanäle 28 auf, so daß die aus den Kanälen 26, 27 und 28 gebildete Kanalanordnung den Zylinderinnenraum 16 und den Gehäuseinnenraum bzw. das Federgehäuse 17 miteinander in Verbindung setzt.

In der Kanalanordnung befindet sich ein Rückschlagventil 29 mit einer Ventilkugel 30, welche durch eine Feder 31 gegen einen in einem Ventilgehäuse 32 vorgesehenen Ventilsitz vorgespannt ist. Das Ventilgehäuse 32 ist unter Zwischenlage eines Dichtungsringes 33 in den Boden des Gehäuseeinsatzes 25 seinerseits eingesetzt. Das Rückschlagventil 29 gestattet also über die Kanalanordnung aus den Kanälen 26, 27 und 28 nur eine Druckflüssigkeitsströmung von dem Gehäuseinnenraum 17 in den Zylinderinnenraum 16 hinein, während eine Strömung in umgekehrter Richtung gesperrt wird.

Schließlich sei noch erwähnt, daß die Anschlußlager 7 und 9 der Kolbenstange 8 bzw. des Gehäuses 10 jeweils eine in eine Bohrung des Lageransatzes eingesetzte Bundbuchse 34 bzw. 35 und eine in deren Bohrung eingesetzte Lagerbuchse 36 bzw. 37 aufweisen.

Während in der vorliegenden Beschreibung von einer vertikalen Stellung des Lenkerelementes 6 ausgegangen ist, gestattet die hier angegebene Konstruktion ohne weiteres eine Schrägstellung beispielsweise unter einem Winkel von 45°, wobei die Flüssigkeitsfüllung in dem Zylinderinnenraum 16 und dem Gehäuseinnenraum dazu ausreicht, den Zylinderinnenraum 16 stets flüssigkeitsgefüllt zu halten und in dem Gehäuseinnenraum 17 ein ausreichendes Luftvolumen zum Ausgleich der durch die Kolbenstange im Zylinder 14 verdrängten und über das Spiel bei 15 ausgetriebenen Flüssigkeit zur Verfügung zu stellen.

Die Flüssigkeitsfüllung des Lenkerelementes 6 entfaltet in Zusammenwirkung mit dem Leckströmungskanal durch das Spiel bei 15 und dem Rückschlagventil 29 eine Stoßdämpferwirkung zur wirkungsvollen Unterdrückung von Schwingungen des Keilriemens 1.

## Patentansprüche

1. Vorrichtung zum Spannen von Keilriemen, insbesondere für Kraftfahrzeuge, mit einem bewegbaren Lenker (4), der eine Keilriemenscheibe (3) zum Spannen eines Keilriemens (1) trägt sowie gehäusefest gelagert ist und an dem ein längenveränderliches Spannelement (6) angreift, welches ein Gehäuse (10), eine ein Anschlußlager (7) tragende und im Gehäuse geführte Kolbenstange (8) sowie eine zwischen einem Federlager (19) des Gehäuses (10) und einem Federlager (20) der Kolbenstange (8) eingespannte Druck-Schraubenfeder (18) enthält, wobei das Anschlußlager (7) mit dem Lenker (4) gekoppelt ist, mit einem in Bezug auf die Gebrauchslage der Spannvorrischtung vom Boden des Gehäuses (10) aufragenden Zylinder (14), der einen druckflüssigkeitsgefüllten Zylinderraum bildet, in dem ein Kolbenabschnitt (13) der Kolbenstange (8) angeordnet ist, wobei eine Leck-Druckflüssigkeitsströmung in Richtung eines im wesentlichen durch den Gehäusemantel und den Zylinder (14) gebildeten Gehäuseinnenraumes (17) über ein Spiel (15) möglich ist und der Gehäuseinnenraum (17) mit dem Zylinderraum (16) über ein federbelastetes Rückschlagventil (29) derart verbunden ist, daß das Rückschlagventil (29) eine Druckflüssigkeitsströmung aus dem Zylinderraum (16) sperrt, <u>dadurch gekennzeichnet</u>, daß das Gehäuse (10) von einem weiteren Anschlußlager (9) getragen ist und der Gehäuseinnenraum (17), der sich zwischen der Kolbenstange (8) bzw. dem diese umfassenden Zylinder (14) einerseits und dem Gehäusemantel andererseits erstreckt, mit dem Zylinderraum (16) bzw. Rückschlagventil (29) über eine Kanalnordnung (26, 27, 28) verbunden ist, wobei das die Leck-Druckflüssigkeitsströmung zulassende Spiel (15) sich zwischen dem Kolbenabschnitt (13) der Kolbenstange (8) und dem Zylinder (14) befindet.

2. Vorrichtung nach Anspruch 1, dadurch gekennzeichnet, daß der Gehäuseinnenraum (17) eine Federkammer für die DruckSchraubenfeder (18) bildet, welche den vom Gehäuseboden aufragenden Zylinder (14) umschlingt und zu dem in dem Gehäuse (10) geführten Federlager (20) der Kolbenstange (8) reicht.

3. Vorrichtung nach Anspruch 2, dadurch gekennzeichnet, daß das Federlager (20) auf der Kolbenstange (8) verschieblich geführt ist und sich gegen einen in einer Nut oder Rille (11) der Kolbenstange eingesetzten Federring (12) abstützt.

4. Vorrichtung nach Anspruch 3, dadurch gekennzeichnet, daß die Kolbenstange (8) in dem Gehäuse (10) von einem Gehäusedeckel (21) gehalten ist, der eine die Kolbenstange umfassende Abstreifdichtung (22) und einen Radialflansch (23) aufweist, der als Anschlag mit dem Federring (12) zusammenwirkt.

5. Vorrichtung nach einem der Ansprüche 1 bis 4, dadurch gekennzeichnet, daß die Kanalanordnung (26, 27, 28) vom Boden des Zylinderraums (16) ausgeht, an der Stirnseite eines den Zylinder (14) und das gehäuseseitige Federlager (19) bildenden Gehäuseeinsatzes (25) radial nach außen und dann zwischen dem Gehäus-einsatz und dem Gehäuseaußenmantel axial zu dem Gehäuseinnenraum (17) verläuft.

## Claims

1. Device for tensioning V-belts particularly for automotive vehicles, comprising a movable guide link (4) which carries a V-belt pulley (3) for the tensioning of a V-belt (1) while being mounted fixed to a housing and to which a tensioning element (6) of variable length is applied which comprises a housing (10), a piston rod (8) carrying a connecting bearing (7) and guided in the housing, as also a coiled compression spring (18) compressed between a spring seat (19) of the housing (10) and a spring seat (20) of the piston rod (8), the connecting bearing (7) being coupled to the guide link (4), a cylinder (14) extending upwards from the bottom of the housing (10) with respect to the position of use of the tensioning device, which cylinder forms a pressure fluid filled cylinder chamber in which a piston section (13) of the piston rod (8) is arranged, wherein a pressure fluid leakage flow in the direction of an inner housing chamber (17) formed essentially by the side wall of the housing and the cylinder (14) is possible through a clearance (15), and the inner housing chamber (17) is connected via a spring-loaded non-return valve (29) with the cylinder chamber (16) in such a way that the non-return valve (29) blocks pressure fluid flow out of the cylinder chamber (16), characterized in that the housing (10) is carried by a further connecting bearing (9) and the inner housing chamber (17) which extends between the piston rod (8), or the cylinder (14) surrounding this, on the one side and the side wall of the housing on the other side, communicates with the cylinder chamber (16), or the non-return valve (29), via a canal arrangement (26, 27, 28), the clearance (15) permitting the pressure fluid leakage flow being situated between the piston section (13) of the piston rod (8) and the cylinder (14).

2. Device according to claim 1, characterized in that the inner housing chamber (17) forms a spring chamber for the coiled compression spring (18) which encircles the cylinder (14) extending upwards from the housing bottom and extends up to the spring seat (20) of the piston rod (8), which spring seat is guided in the housing.

3. Device according to claim 2, characterized in that the spring seat (20) is displaceably guided on the piston rod (8) and bears against a spring ring (12) inserted in a groove or channel (11) of the piston rod.

4. Device according to claim 3, characterized in that the piston rod (8) is retained in the housing (10) by a housing cap (21) which comprises a wiping seal (22) surrounding the piston rod and a radial flange (23) which cooperates as a stop with the spring ring (12).

5. Device according to one of the claims 1 to 4, characterized in that the canal arrangement (26, 27, 28) begins at the bottom of the cylinder chamber (16), extends radially outwards at the end surface of a housing insert (25) which forms the cylinder (14) and the housing-side spring seat (19), and then extends axially between the housing insert and the side wall of the housing up to the inner housing chamber (17).

## Revendications

1. Tendeur de courroies trapézoïdales en particulier pour véhicules automobiles, comprenant une tige directrice mobile (4) qui porte une poulie (3) de courroie trapézoïdale pour tensionner une courroie trapézoïdale (1), et qui est fixée au'boîtier et attaquée par un élément de tensionnement (6) à longueur variable qui comprend un boîtier (10), une tige de piston (8) guidée dans le boîtier et portant un palier de raccordement (7), ainsi qu'un ressort de pression à boudin (18) calé entre un siège de ressort (19) du côté du boîtier (10) et un siège de ressort (20) du côté de la tige de piston (8), le palier de raccordement (7) étant accouplé à la tige directrice (4), le tendeur comprenant également un cylindre (14) qui s'étend à partir du fond du boîtier (10) vers le haut par rapport à la position d'utilisation du tendeur et qui forme une chambre de cylindre remplie de fluide sous pression, chambre

EP 0 329 738 B1

dans laquelle est disposé un tronçon de piston (13) de la tige de piston (8), un écoulement du fluide sous pression par une fuite, dans la direction d'une chambre intérieure (17) du boîtier formée essentiellement par la paroi latérale du boîtier et le cylindre (14), étant rendu possible par un jeu (15), la chambre intérieure (17) du boîtier étant reliée à la chambre (16) du cylindre par un clapet anti-retour (29) qui est sollicité par un ressort, de telle façon que le clapet anti-retour (29) bloque un écoulement du fluide de pression à partir de la chambre (16) du cylindre, caractérisé en ce que le boîtier (10) est porté par un palier de raccordement supplémentaire (9), et en ce que la chambre intérieure (17) du boîtier qui s'étend entre la tige de piston (8), et respectivement entre le cylindre (14) qui l'entoure d'une part, et la paroi latérale du boîtier d'autre part, est reliée par un ensemble de canaux (26, 27, 28) à la chambre (16) du cylindre et au clapet anti-retour (29), le jeu (15) qui permet une fuite par écoulement du fluide sous pression se trouvant entre le tronçon de piston (13) de la tige de piston (8) et le cylindre (14).

2. Tendeur selon la revendication 1, caractérisé en ce que la chambre intérieure (17) du boîtier forme un logement de ressort pour le ressort de pression à boudin (18) qui s'enroule autour du cylindre (14) s'étendant vers le haut à partir du fond du boîtier pour aller jusqu'au siège de ressort (20) du côté de la tige de piston (8), lequel siège est guidé dans le boîtier (10).

3. Tendeur selon la revendication 2, caractérisé en ce que le siège de ressort (20) est guidé de façon coulissante sur la tige de piston (8) et s'appuie contre une rondelle élastique (12) insérée dans une rainure ou cannelure (11) prévue sur la tige de piston.

4. Tendeur selon la revendication 3, caractérisé en ce que la tige de piston (8) est retenue dans le boîtier (10) par un capuchon de boîtier (21) comprenant un joint racleur (22) qui entoure la tige de piston et une bride radiale (23) qui agit comme butée avec la rondelle élastique (12).

5. Tendeur selon l'une quelconque des revendications 1 à 4, caractérisé en ce que le groupement de canaux (26, 27, 28) s'étend à partir du fond de la chambre (16) du cylindre pour aller radialement vers l'extérieur le long de la face frontale d'un insert (25) de boîtier qui forme le cylindre (14) et le siège de ressort (19) du côté du boîtier, et s'étend ensuite axialement entre l'insert de boîtier et la paroi latérale du boîtier jusqu'à la chambre intérieure (17) du boîtier.

FIG.1

FIG. 2